# EUROPEAN PATENT APPLICATION

(11) **EP 4 459 578 A1**
(43) Date of publication of application: **06.11.2024**
(21) Application number: 23171335.5
(22) Date of filing: 03.05.2023
(51) Int. Cl.: G07C 9/00, B60R 25/00, G01S 5/00

(54) **APPARATUS, METHODS AND COMPUTER PROGRAMS FOR DETERMINING A LOCATION OF A KEY DEVICE AND FOR PRE-PROCESSING UWB MEASUREMENT INFORMATION**

(71) Applicant: Bayerische Motoren Werke Aktiengesellschaft, 80809 München (DE)
(72) Inventor: Heidmann, Fanny, 80796 München (DE)

(57) **Abstract**

Examples relate to an apparatus, method and computer program for determining a location of a key device relative to a vehicle, and to a method and computer program for determining normalization factors for pre-processing UWB measurement information. The apparatus (10) for determining a location of a key device (20) relative to a vehicle (100) is configured to obtain UWB measurement information being indicative of a distance between the key device and at least one UWB transceiver (102) of the vehicle, pre-process the UWB measurement information to obtain normalized UWB measurement information, process, using a machine-learning model being trained to determine the location of the key device based on the normalized UWB measurement information, the normalized UWB measurement information, and determine the location of the key device based on an output of the machine-learning model.

## Description

### Field

Examples relate to an apparatus, method and computer program for determining a location of a key device relative to a vehicle, and to a method and computer program for determining normalization factors for pre-processing ultrawideband (UWB) measurement information.

### Background

A technology that is commonly used in vehicles is the so-called "Keyless Go" functionality, which is a feature that allows drivers to start and operate a vehicle without having to physically insert a key into the ignition. Instead, presence of a key device, such as key fob or smartphone, inside a vehicle is detected and used to unlock the keyless go functionality. Being able to locate the key device (e.g., key fob, phone or smartwatch) inside or outside the vehicle is necessary for this task, as the car engine can only be started if the user holding the device is deemed inside the car.

For the localization of the key device, machine-learning-based approaches can be used. For example, US 2022/0292388 A1 relates to machine-learning based mobile device localization for the purpose of keyless go. WO 2022/008110 A1 relates to methods, devices and computer program for training a machine-learning model for this purpose.

However, the training of machine-learning models is a computationally intensive task, which renders machine-learning-based approaches expensive, in particular since the detection is highly dependent on the vehicle model and the key device being used.

There may be a desire for an improved concept for detecting presence of a key device inside a vehicle.

### Summary

This desire is addressed by the subject-matter of the independent claims.

Various examples of the present disclosure are based on the finding, that the overall computational effort for training a machine-learning model to perform the detection can be reduced by training a single model for different combinations of vehicles and key devices. To enable the use of the single model, a pre-processor is used to transform the data input into the machine-learning model, such as the time-of-flight and signal strength of the UltraWideBand (UWB) tracking signals used for this purpose, into a normalized form that is then processed by the machine-learning model. As determining the necessary parameters for operating such a pre-processor is less effort than training a machine-learning model anew, the overall computation effort, and thus cost, can be reduced.

Some aspects of the present disclosure relate to an apparatus for determining a location of a key device relative to a vehicle. The apparatus comprises interface circuitry and processor circuitry. The apparatus is configured to obtain ultrawideband (UWB) measurement information being indicative of a distance between the key device and at least one UWB transceiver of the vehicle. The apparatus is configured to pre-process the UWB measurement information to obtain normalized UWB measurement information. The apparatus is configured to process, using a machine-learning model being trained to determine the location of the key device based on the normalized UWB measurement information, the normalized UWB measurement information. The apparatus is configured to determine the location of the key device based on an output of the machine-learning model. By using the pre-processing operation together with a key device-independent machine-learning model, the machine-learning model can be re-used, and the computational effort, and thus cost, can be reduced.

For example, the apparatus may be configured to pre-process the UWB information to compensate for an UWB signal transmission performance or UWB signal strength measurement behavior of a key device model of the key device. This way, the machine-learning model can be used for different key device models.

In various examples, the apparatus may be configured to pre-process the UWB information to compensate for an impact of a vehicle model of the vehicle on the UWB measurement. This way, the machine-learning model may be employed in different vehicle models.

For example, the apparatus may be configured to pre-process the UWB information to compensate for an impact of an environment of the vehicle on the UWB measurement. This way, the same machine-learning model can be used in different vehicular environments, e.g., in a parking garage, in a car wash, on the street etc.

In various examples, the apparatus may be configured to pre-process the UWB measurement information based on a normalization factor. Such a normalization factor can be derived statistically, which is less computationally expensive than training or re-training the machine-learning model.

The normalization factor may be at least one of key device model-specific, vehicle model-specific, vehicular environment-specific and UWB channel-specific. Thus, depending on the key device, vehicle model and vehicular environment being used, a suitable normalization factor can be selected.

For example, the normalization factor may comprise two or more components. The two or more components may comprise two or more of a factor to compensate for an UWB signal transmission performance of a key device model of the key device, a factor to compensate for an UWB signal strength measurement behavior of a key device model of the key device, a factor to compensate for an impact of a vehicle model of the vehicle on the UWB measurement, and a factor to compensate for an impact of an environment of the vehicle on the UWB measurement. By combining multiple components, a specific combination of key device model, vehicle model (and potentially vehicular environment) can be appropriately compensated for during the pre-processing operation.

In some examples, the apparatus may comprise a memory with a plurality of normalization factors stored in the memory. The apparatus may be configured to select a normalization factor from the memory based on at least one of a key device model of the key device, an environment of the vehicle, and an UWB channel being used for an UWB ranging signal. Thus, depending on the key device, vehicle model and vehicular environment being used, a suitable normalization factor can be selected.

For example, the machine-learning model may be a classifier that is trained to output information on whether the key device is inside or outside the vehicle. The distinction between the key device being inside or outside the vehicle is usually sufficient for the purpose of the Keyless Go functionality. Moreover, the training of classifiers involves less effort than other (supervised) training approaches, as two different labels suffice for labeling the training data.

According to an example, the UWB measurement information may comprise at least one of a time-of-flight of an UWB ranging signal and a signal strength of the UWB ranging signal, the UWB ranging signal being transmitted by the key device and received by at least one UWB transceiver of the vehicle or being transmitted by at least one UWB transceiver of the vehicle and received by the key device. Signal strength and time-of-flight are generally obtainable from the ranging procedures of different types of UWB devices. However, they are generally device-, vehicle- and vehicular environment-specific, as different key devices have different transmission properties (including variations in time-of-flight measurements and signal strengths being used), as different vehicle models have different dimensions and placements of UWB receivers, and as reflections of the UWB ranging signals differ in different vehicular environments. These differences can be mitigated by the pre-processing operation.

Some aspects of the present disclosure relate to a corresponding method for determining a location of a key device relative to a vehicle. The method comprises obtaining UWB measurement information being indicative of a distance between the key device and at least one UWB transceiver of the vehicle. The method comprises pre-processing the UWB measurement information to obtain normalized UWB measurement information. The method comprises processing, using a machine-learning model being trained to determine the location of the key device based on the normalized UWB measurement information, the normalized UWB measurement information. The method comprises determining the location of the key device based on an output of the machine-learning model.

Some aspects of the present disclosure relate to a method for determining normalization factors for pre-processing UWB measurement information, The method comprises obtaining a plurality of sets of UWB measurement information. Each set of UWB measurement information is indicative of a reference distance between a key device and at least one UWB transceiver of a vehicle. The plurality of sets of UWB measurement information are based on measurements of UWB ranging signals of at least two different key device models. The method comprises determining, for each of the at least two different key device models, a relationship between the UWB measurement information and reference UWB measurement information. The method comprises determining, for each of the at least two different key device models, a normalization factor based on the relationship between the UWB measurement information and the reference UWB measurement information. The determined normalization factors can then be used to pre-process the UWB measurements used by the apparatus and method for determining the location of the key device.

In some examples, the plurality of sets of UWB measurement information are based on measurement of UWB ranging signals by UWB transceivers of at least two different vehicle models. The method may comprise determining, for each of the at least two different vehicle models, a relationship between the UWB measurement information and reference UWB measurement information. The method may comprise determining, for each of the at least two different vehicle models, a normalization factor based on the relationship between the UWB measurement information and the reference UWB measurement information. This way, the normalization factors for different vehicles may be determined.

Finally, the normalization factors may also be determined for different vehicular environments. For example, the plurality of sets of UWB measurement information are based on measurement of UWB ranging signals by UWB transceivers of vehicles in at least to different vehicular environments. The method may comprise determining, for each of the at least two different vehicular environments, a relationship between the UWB measurement information and reference UWB measurement information. The method may comprise determining, for each of the at least two different vehicular environments, a normalization factor based on the relationship between the UWB measurement information and the reference UWB measurement information.

An aspect of the present disclosure relates to a computer program having a program code for performing at least one of the above methods, when the computer program is executed on a computer, a processor, or a programmable hardware component.

### Brief description of the Figures

Some examples of apparatuses and/or methods will be described in the following by way of example only, and with reference to the accompanying figures, in which
- Fig. 1a: shows a block diagram of an example of an apparatus for determining a location of a key device relative to a vehicle, and of a vehicle comprising such an apparatus;
- Fig. 1b: shows a flow chart of an example of a method for determining a location of a key device relative to a vehicle; and
- Fig. 2: shows a flow chart of an example of a method for determining normalization factors for pre-processing UWB measurement information.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

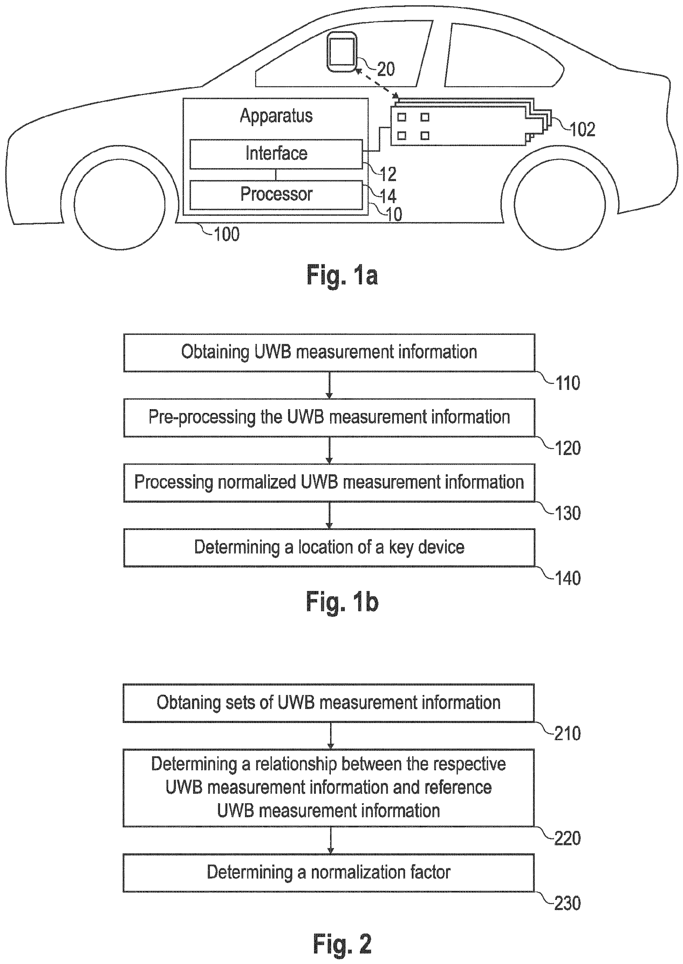

Fig. 1a shows a block diagram of an example of an apparatus 10 for determining a location of a key device 20 relative to a vehicle 100, and of a vehicle 100 comprising such an apparatus 10. For example, the apparatus 10 of Fig. 1a comprises interface circuitry 12 and processor circuitry 14. For example, the processor circuitry 14 may be coupled with the interface circuitry 12. For example, the processor circuitry 14 may provide the functionality of the apparatus, in conjunction with the interface circuitry 12 (for exchanging information, e.g., with other components inside or outside the vehicle 100 comprising the apparatus 10, such as at least one UWB transceiver 102 of the vehicle, and, via the at least one UWB transceiver 102, a key device). In some examples, the functionality of the processor circuitry 14 may be implemented by the processor circuitry 14 executing machine-readable instructions. Accordingly, any feature ascribed to the processor circuitry 14 may be defined by one or more instructions of a plurality of machine-readable instructions. The apparatus 10 may comprise the machine-readable instructions, e.g., within a memory circuitry of the apparatus 10. For example, the vehicle 100 may comprise the apparatus 10 and the at least one UWB transceiver 102. For example, the apparatus 10 may be an electronic control unit (ECU) of the vehicle.

The apparatus is configured to obtain UWB measurement information being indicative of a distance between the key device and at least one UWB transceiver 102 of the vehicle. The apparatus is configured to pre-process the UWB measurement information to obtain normalized UWB measurement information. The apparatus is configured to process, using a machine-learning model being trained to determine the location of the key device based on the normalized UWB measurement information, the normalized UWB measurement information. The apparatus is configured to determine the location of the key device based on an output of the machine-learning model.

Fig. 1b shows a flow chart of an example of a corresponding method for determining a location of a key device relative to a vehicle. For example, the method may be performed by the vehicle, e.g., by an electronic control unit (ECU) of the vehicle. The method comprises obtaining 110 the UWB measurement information being indicative of the distance between the key device and the at least one UWB transceiver of the vehicle. The method comprises pre-processing 120 the UWB measurement information to obtain the normalized UWB measurement information. The method comprises processing 130, using the machine-learning model, the normalized UWB measurement information. The method comprises determining 140 the location of the key device based on an output of the machine-learning model.

In the following, the features of the apparatus 10, the method and of a corresponding computer program are discussed in more detail with respect to the apparatus 10. Features introduced in connection with the apparatus 10 may likewise be included in the corresponding method and computer program.

Various examples of the present disclosure relate to an apparatus, method and computer program for determining the location of the key device 20 relative to a vehicle 100 with the help of a machine-learning model being trained to determine the location. While the use of machine-learning models for this purpose is known from literature, in the proposed concept, the machine-learning model is not specifically trained to operate on a single key device model or a single vehicle model. Instead, pre-processing is employed to allow a single machine-learning model to be used across various key device models and/or various vehicle models.

The process starts with obtaining UWB measurement information being indicative of a distance between the key device and at least one UWB transceiver 102 of the vehicle. For example, the apparatus 10 may be configured to obtain the UWB measurement information from the at least one UWB transceiver via the interface circuitry 12. For example, the UWB measurement information may comprise UWB measurement information that is based on a single UWB ranging signal between an UWB transceiver 102 of the vehicle and the key device 20. Alternatively, the UWB measurement information may comprise UWB measurement information that is based on a two or more UWB ranging signals between two or more UWB transceivers 102 of the vehicle and the key device 20. The UWB measurement information may generally comprise two pieces of information (for each ranging signal) - the time of flight of the UWB ranging signal, and the signal strength of the UWB ranging signal (at the respective receiver). In other words, the UWB measurement information may comprise at least one of a time-of-flight of an UWB ranging signal and a signal strength of the UWB ranging signal (as measured by the receiving device). In some examples, the UWB ranging signal or UWB ranging signals may be transmitted by the key device and received by at least one UWB transceiver of the vehicle. Alternatively, the UWB ranging signal or UWB ranging signals may be transmitted by at least one UWB transceiver of the vehicle and received by the key device. In the former case, obtaining the UWB measurement information may comprise measuring the time of flight of the UWB ranging signal(s), and the signal strength of the UWB ranging signal(s) via the at least one UWB transceiver. In the latter case, obtaining the UWB measurement information may comprise receiving the UWB measurement information from the key device, via the at least one UWB transceiver of the vehicle.

The UWB measurement information is then pre-processed to produce normalized UWB measurement information. In other words, the UWB measurement information is brought into a state that is normalized (i.e., made comparable) across different key device models, vehicle models, and/or vehicular environments. This is done to (attempt to) compensate for differences between the different key device models, vehicle models, and/or different vehicular environments. For example, different key device models may have different UWB signal transmission strengths when transmitting an UWB ranging signal, or report different UWB signal receive strength measurements for the same UWB ranging signals. Accordingly, the apparatus may be configured to pre-process the UWB information to compensate for an UWB signal transmission performance or UWB signal strength measurement behavior of a key device model of the key device. Moreover, different vehicle models have different dimensions, different materials (with different signal reflection/absorption behaviors), and different placements of their UWB transceivers. Accordingly, the apparatus may be configured to pre-process the UWB information to compensate for an impact of a vehicle model (e.g., vehicle dimensions, materials used for the vehicle, placement of UWB transceiver(s)) of the vehicle on the UWB measurement.

Finally, the vehicular environment of the vehicle has an impact on the UWB measurements, as reflections are more likely to occur in parking garages than on the open road (see, for example, WO 2022/008110 A1, where the impact of different vehicular environments is modeled during training of the machine-learning model being used). Accordingly, the apparatus may be configured to pre-process the UWB information to compensate for an impact of an environment of the vehicle on the UWB measurement.

To achieve the various compensations illustrated above, the apparatus may be configured to pre-process the UWB measurement information based on a normalization factor. For example, the normalization factor may, as the term indicates, be multiplied with the UWB measurement information to obtain the normalized UWB measurement information. For example, the normalization factor may comprise a separate normalization factor for each component of the UWB measurement information, e.g., a first normalization factor for the time-of-flight, and a second normalization factor for the received signal strength. Moreover, to model different combinations of key device model, vehicle model and vehicular environment, the normalization factor may be determined by combining (e.g., multiplying) different components. For example, the normalization factor may comprise two or more components. For example, the normalization factor may be determined by combining (e.g., multiplying) the two or more components. For example, the two or more components may comprise two or more of a factor to compensate for an UWB signal transmission performance of a key device model of the key device, a factor to compensate for an UWB signal strength measurement behavior of a key device model of the key device, a factor to compensate for an impact of a vehicle model of the vehicle on the UWB measurement, and a factor to compensate for an impact of an environment of the vehicle on the UWB measurement. These factors may be known for each key device model, vehicle model, vehicular environment etc., e.g., as shown in connection with Fig. 2.

In addition, the UWB channel being used for the UWB ranging signal may have an impact on the signals, as the different UWB channels operate in different wavelength bands, which impact the signal transmission properties of the UWB ranging signal. Accordingly, the normalization factor may further be based on the UWB channel being used for the UWB ranging signal.

The components for the respective vehicle model of the vehicle, key device model, vehicular environment and UWB channel may be selected to compose the normalization factor being used for pre-processing the UWB measurement information. For example, the apparatus 10 may comprise a memory (not shown) with a plurality of normalization factors stored in the memory. The apparatus may be configured to select a normalization factor from the memory, e.g., the components of the normalization factor from memory, based on at least one of a key device model of the key device, an environment of the vehicle, and an UWB channel being used for the UWB ranging signal. As the apparatus is used in a single vehicle model, it is assumed that the normalization factors stored in the memory are all based on the vehicle model of the vehicle. If this is not the case, the normalization factor may be further selected from the memory based on the vehicle of the model. The normalization factors, or components thereof, stored in the memory may be updated upon release of a new key device model, for example. Generation of the normalization factors, and/or of the components of the normalization factors is discussed in connection with Fig. 2.

The (resulting) normalization factor may be at least one of key device model-specific, vehicle model-specific, vehicular environment-specific and UWB channel-specific. For example, the normalization factor may be key device model- and vehicle model-specific, key device model-, vehicle model- and UWB channel-specific, or key device-model-, vehicle model-, vehicular environment- and UWB channel-specific.

In the previous implementations, a multiplication was used as an example for combining the components of the normalization factor. However, in some implementations, a more nuanced approach may be used, in which the normalization factor used is non-linear. For example, the normalization factor may comprise an additional compensation factor for compensating for an effect of the distance between the UWB transceiver(s) of the vehicle and the key device, by making the second normalization factor (for the received signal strength) dependent on the time-of-flight, which is proportional to the distance between the UWB transceiver(s) and the key device.

The apparatus then processes, using a machine-learning model being trained to determine the location of the key device based on the normalized UWB measurement information, the normalized UWB measurement information. In the following, a short introduction is given on machine learning, followed by application of the concept on the present case.

Machine learning refers to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and associated training content information, the machine-learning model "learns" to recognize the content of the images, so the content of images that are not included of the training images can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model.

Machine-learning models are trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm, e.g., a classification algorithm, a regression algorithm or a similarity learning algorithm. Classification algorithms may be used when the outputs are restricted to a limited set of values, i.e., the input is classified to one of the limited set of values. Regression algorithms may be used when the outputs may have any numerical value (within a range). Similarity learning algorithms are similar to both classification and regression algorithms, but are based on learning from examples using a similarity function that measures how similar or related two objects are.

Apart from supervised or semi-supervised learning, unsupervised learning may be used to train the machine-learning model. In unsupervised learning, (only) input data might be supplied, and an unsupervised learning algorithm may be used to find structure in the input data, e.g., by grouping or clustering the input data, finding commonalities in the data. Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

In the present case, the machine-learning model may be trained as a classifier, to classify the location of the key device as being either inside or outside the vehicle. In other words, the machine-learning model may be a classifier that is trained to output information on whether the key device is inside or outside the vehicle. For this purpose, the training data may comprise a plurality of training samples, with each training sample comprising normalized UWB measurement information as training input data and a label ("inside", "outside", 0 or 1) indicating whether the key device is inside or outside the vehicle.

The apparatus then determines the location of the key device based on an output of the machine-learning model. For example, if the output of the machine-learning model indicates that the key device is inside the vehicle, the location of the key device may be determined to be inside the vehicle, and, if the output of the machine-learning model indicates that the key device is outside the vehicle, the location of the key device may be determined to be outside the vehicle.

For example, a key device may be a dedicated key device, or a user terminal, such as a smartphone or smartwatch. A key device model of the key device may be a specific revision of the key device, e.g., a revision of the key device having a certain model number. For example, if the key device is a smartphone, the key device model may be the smartphone model (e.g., iPhone^{®} 14, a trademark of Apple Inc.), or a specific combination of smartphone model and UWB transceiver being used in the smartphone (if different UWB transceivers are used). For example, the vehicle 100 may be a land vehicle, a road vehicle, a car, an automobile, an off-road vehicle, a motor vehicle, a truck or a lorry. A vehicle model may be a specific revision of the vehicle, e.g., a model year of a line of vehicle models, or a time package of a model year of a line of vehicle models.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge, e.g., based on the training performed by the machine-learning algorithm. In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of the sum of its inputs. The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e., to achieve a desired output for a given input. In at least some embodiments, the machine-learning model may be deep neural network, e.g., a neural network comprising one or more layers of hidden nodes (i.e., hidden layers), preferably a plurality of layers of hidden nodes.

Alternatively, the machine-learning model may be a support vector machine. Support vector machines (i.e., support vector networks) are supervised learning models with associated learning algorithms that may be used to analyze data, e.g., in classification or regression analysis. Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

The interface circuitry 12 may correspond to one or more inputs and/or outputs for receiving and/or transmitting information, which may be in digital (bit) values according to a specified code, within a module, between modules or between modules of different entities. For example, the interface circuitry 12 may comprise interface circuitry configured to receive and/or transmit information.

In embodiments the processor circuitry 14 may be implemented using one or more processing units, one or more processing devices, any means for processing, such as a processor, a computer or a programmable hardware component being operable with accordingly adapted software. In other words, the described function of the processor circuitry 14 may as well be implemented in software, which is then executed on one or more programmable hardware components. Such hardware components may comprise a general purpose processor, a Digital Signal Processor (DSP), a micro-controller, etc.

A UWB transceiver is a communication component that is configured to transmit and receive data over a wide frequency range, according to the frequency spectra used by UWB communication. UWB transceivers use a large spectrum of frequencies in the range of 3.1 GHz to 10.6 GHz to transmit and receive data at high speeds.

More details and aspects of the apparatus 10, vehicle 100, method and corresponding computer program are mentioned in connection with the proposed concept or one or more examples described above or below (e.g. Fig. 2). The apparatus 10, vehicle 100, method and corresponding computer program may comprise one or more additional optional features corresponding to one or more aspects of the proposed concept or one or more examples described above or below.

Fig. 2 shows a flow chart of an example of a computer-implemented method for determining normalization factors for pre-processing UWB measurement information. The method comprises obtaining 210 a plurality of sets of UWB measurement information (e.g., as described in connection with Figs. 1a to 1b). Each set of UWB measurement information is indicative of a reference distance (e.g., one of a set of reference distances) between a key device and at least one UWB transceiver of a vehicle.

These sets of UWB measurement information are now compared to reference UWB measurement information. For example, the reference UWB measurement information may be collected from an (arbitrarily chosen) combination of vehicle model, key device model and/or vehicular environment. Alternatively, an average or median value (among the sets of measurement information collected from the same location inside or outside the vehicle being used for collecting the respective UWB measurement information) may be used as reference UWB measurement information.

The plurality of sets of UWB measurement information are based on measurements of UWB ranging signals of at least two different key device models, of at least two different vehicle models, and/or at least two different vehicular environments. For example, for at least one vehicle model, at least one set of UWB measurement information may be included for each key device model (e.g., to generate a full set of combinations of the vehicle model and all of the different key device models). Additionally, or alternatively, for at least one key device model, at least one set of UWB measurement information may be included for each vehicle model (e.g., to generate a full set of combinations of the key device model and all of the different vehicle models). Additionally, or alternatively, for at least one combination of vehicle model and key device model, at least one set of UWB measurement information may be included for each vehicular environment (e.g., parking garage, parking lot, car wash, open road etc.). This may be repeated for each UWB channel being used for UWB ranging.

The method comprises determining 220, for each of the at least two different key device models, a relationship between the UWB measurement information and reference UWB measurement information (e.g., by dividing the respective UWB measurement information by the reference UWB measurement information, or vice versa). Similarly, the method may comprise determining 220, for each of the at least two different vehicle models, a relationship between the UWB measurement information and reference UWB measurement information. Finally, the method may comprise determining 220, for each of the at least two different vehicular environments, a relationship between the UWB measurement information and reference UWB measurement information.

These relationships may now be used to generate the normalization factors, e.g., the factors for the different key device models, vehicle models and/or vehicular environments. Accordingly, the method may comprise determining 230, for each of the at least two different key device models, a normalization factor (e.g., a factor to compensate for an UWB signal transmission performance of a key device model of the key device, a factor to compensate for an UWB signal strength measurement behavior of a key device model of the key device) based on the relationship between the UWB measurement information and the reference UWB measurement information. Additionally, or alternatively, the method may comprise determining 230, for each of the at least two different vehicle models, a normalization factor (e.g., a factor to compensate for an impact of a vehicle model of the vehicle on the UWB measurement) based on the relationship between the UWB measurement information and the reference UWB measurement information. Additionally, or alternatively, the method may comprise determining 230, for each of the at least two different vehicular environments, a normalization factor (e.g., a factor to compensate for an impact of an environment of the vehicle on the UWB measurement) based on the relationship between the UWB measurement information and the reference UWB measurement information. For example, a statistical analysis (to determine the expectancy value, variation and mean deviation) may be used to determine the respective normalization factor or sub-factor. The different components of the normalization factor (as introduced in connection with Figs. 1a/1b may be used to calculate the respective composite normalization factor).

This process may be repeated for each of the different UWB channels used for UWB ranging between vehicles and key devices.

More details and aspects of the method and of a corresponding computer program are mentioned in connection with the proposed concept or one or more examples described above or below (e.g., Fig. 1a-1b). The method and corresponding computer program may comprise one or more additional optional features corresponding to one or more aspects of the proposed concept or one or more examples described above or below.

Various examples of the present disclosure relate to machine-learning-based device localization that is independent from the device and the car models being used.

The present disclosure relates to machine-learning-based localization of a digital key around the car (i.e., vehicle). Being able to locate the digital device (e.g., phone or smart watch) holding the key inside or outside the car is mandatory. For example, the car engine can only be started if the user holding the device is inside the car. In some cases, the digital device (that is assumed to be equipped with an UWB antenna) can be located inside or outside a car using UWB communication between the digital device and the car. From this live communication between the digital device and the car (e.g., three frames per second), and for each of the car's UWB transceivers/antennas, two pieces of information are received: the power (e.g., signal strength) of the UWB ranging signal that is sent from the given car antenna to the device, and the time of flight (which indicates directly a measured distance to the given car antenna). From these two values, whether the device is inside or outside the car can be inferred. This can be done using a rule-based model, by designing application- and physics-specific rules. This requires a large effort to get right. Alternatively, machine-learning can be used. The two values mentioned above are input in a machine-learning model, such as a neural network, which outputs either "inside" or "outside".

To train the machine-learning model, a large amount of training data is required (which is intrinsic to the use of machine-learning). This is exacerbated by the use of separate models for each device model and car model. That means that for each [device model, car model] combination, a large amount of training data is required to train a corresponding machine-learning Model - e.g. [smartphone model 1, vehicle model 1], [smartphone model 1, vehicle model 2], [smartphone model 2, vehicle model 1] etc. As new device models are constantly being released, the effort for training a specific machine-learning models is incurred upon every release, which makes scaling the approach harder.

The proposed concept is based on removing the dependency of the machine-learning model on the device model and/or car model. If this is achieved, the computational effort and time required for training can be reduced severely, as the number of measurements being performed to collect the training data for each new car model and each new phone model can be reduced and the training of separate machine-learning models can be omitted.

In the proposed concept, a single machine-learning model is trained that handles multiple device models and/or multiple car models. A device-specific (respectively car-specific) pre-processing operation is inserted upstream, to take into account the specificities of the device model (e.g. power of UWB transmission, position of the UWB antenna in the device...), respectively the specificities of the car model (e.g. number and position of the UWB antennas, car dimensions...).

For example, the pre-processing can be done based on statistics. For a given phone model, the values input in the machine-learning algorithm (power and time of flight in our case) can be normalized. In a simplified example, if a first smartphone model is known to deliver on average a UWB ranging signal which is twice as powerful as a second smartphone model, then a preprocessing operation would be to divide its power value by two. Of course, this multiplication factor is likely to vary depending on the device localization.

When employing the pre-processing operation. a single machine-learning model can be trained with training samples from either the first smartphone model, the second smartphone model, or both. Hence, if using a statistics-based approach, sample data for each device model may still be required, but less than sample data used to train the machine-learning model. Pre-processing can be done more generally via any prior knowledge on the device capacity, respectively on the car model capacity.

Note that the proposed concept can be used in any other localization model that uses machine-learning, not only for inside /outside detection.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (10) for determining a location of a key device (20) relative to a vehicle (100), the apparatus comprising interface circuitry (12) and processor circuitry (14), wherein the apparatus is configured to:
obtain ultrawideband, UWB, measurement information being indicative of a distance between the key device and at least one UWB transceiver (102) of the vehicle;
pre-process the UWB measurement information to obtain normalized UWB measurement information;
process, using a machine-learning model being trained to determine the location of the key device based on the normalized UWB measurement information, the normalized UWB measurement information; and
determine the location of the key device based on an output of the machine-learning model.

2. The apparatus according to claim 1, wherein the apparatus is configured to pre-process the UWB information to compensate for an UWB signal transmission performance or UWB signal strength measurement behavior of a key device model of the key device.

3. The apparatus according to one of the claims 1 or 2, wherein the apparatus is configured to pre-process the UWB information to compensate for an impact of a vehicle model of the vehicle on the UWB measurement.

4. The apparatus according to one of the claims 1 to 3, wherein the apparatus is configured to pre-process the UWB information to compensate for an impact of an environment of the vehicle on the UWB measurement.

5. The apparatus according to one of the claims 1 to 4, wherein the apparatus is configured to pre-process the UWB measurement information based on a normalization factor.

6. The apparatus according to claim 5, wherein the normalization factor is at least one of key device model-specific, vehicle model-specific, vehicular environment-specific and UWB channel-specific.

7. The apparatus according to one of the claims 5 or 6, wherein the normalization factor comprises two or more components, wherein the two or more components comprise two or more of a factor to compensate for an UWB signal transmission performance of a key device model of the key device, a factor to compensate for an UWB signal strength measurement behavior of a key device model of the key device, a factor to compensate for an impact of a vehicle model of the vehicle on the UWB measurement, and a factor to compensate for an impact of an environment of the vehicle on the UWB measurement.

8. The apparatus according to one of the claims 5 to 7, wherein the apparatus comprises a memory with a plurality of normalization factors stored in the memory, wherein the apparatus is configured to select a normalization factor from the memory based on at least one of a key device model of the key device, an environment of the vehicle, and an UWB channel being used for an UWB ranging signal.

9. The apparatus according to one of the claims 1 to 8, wherein the machine-learning model is a classifier that is trained to output information on whether the key device is inside or outside the vehicle.

10. The apparatus according to one of the claims 1 to 9, wherein the UWB measurement information comprises at least one of a time-of-flight of an UWB ranging signal and a signal strength of the UWB ranging signal, the UWB ranging signal being transmitted by the key device and received by at least one UWB transceiver of the vehicle or being transmitted by at least one UWB transceiver of the vehicle and received by the key device.

11. A method for determining a location of a key device relative to a vehicle, the method comprising:
obtaining (110) ultrawideband, UWB, measurement information being indicative of a distance between the key device and at least one UWB transceiver of the vehicle;
pre-processing (120) the UWB measurement information to obtain normalized UWB measurement information;
processing (130), using a machine-learning model being trained to determine the location of the key device based on the normalized UWB measurement information,
the normalized UWB measurement information; and
determining (140) the location of the key device based on an output of the machine-learning model.

12. A method for determining normalization factors for pre-processing ultrawideband, UWB, measurement information, the method comprising:
obtaining (210) a plurality of sets of UWB measurement information, each set of UWB measurement information being indicative of a reference distance between a key device and at least one UWB transceiver of a vehicle, wherein the plurality of sets of UWB measurement information are based on measurements of UWB ranging signals of at least two different key device models;
determining (220), for each of the at least two different key device models, a relationship between the UWB measurement information and reference UWB measurement information; and
determining (230), for each of the at least two different key device models, a normalization factor based on the relationship between the UWB measurement information and the reference UWB measurement information.

13. The method according to claim 12, wherein the plurality of sets of UWB measurement information are based on measurement of UWB ranging signals by UWB transceivers of at least two different vehicle models, the method comprising determining (220), for each of the at least two different vehicle models, a relationship between the UWB measurement information and reference UWB measurement information, and determining (230), for each of the at least two different vehicle models, a normalization factor based on the relationship between the UWB measurement information and the reference UWB measurement information.

14. The method according to one of the claims 12 or 13, wherein the plurality of sets of UWB measurement information are based on measurement of UWB ranging signals by UWB transceivers of vehicles in at least to different vehicular environments, the method comprising determining (220), for each of the at least two different vehicular environments, a relationship between the UWB measurement information and reference UWB measurement information, and determining (230), for each of the at least two different vehicular environments, a normalization factor based on the relationship between the UWB measurement information and the reference UWB measurement information.

15. A computer program having a program code for performing the method of claim 11 or the method of one of the claims 12 to 14, when the computer program is executed on a computer, a processor, or a programmable hardware component.
